# EUROPÄISCHE PATENTSCHRIFT

(11) **EP 4 262 035 B1**
(45) Veröffentlichungstag und Bekanntmachung des Hinweises auf die Patenterteilung: **18.02.2026**
(21) Anmeldenummer: 23167115.7
(22) Anmeldetag: 06.04.2023
(51) Int. Cl.: H01R 43/20, H01B 13/012, B60R 16/00

(54) **KABELHALTERUNG SOWIE VERFAHREN ZUR HERSTELLUNG EINES ELEKTRISCHEN KABELBAUMS**
CABLE HOLDER AND METHOD FOR PRODUCING AN ELECTRICAL CABLE HARNESS
SUPPORT DE CÂBLE ET PROCÉDÉ DE FABRICATION D'UN FAISCEAU DE CÂBLES ÉLECTRIQUES

(30) Priorität: 13.04.2022 DE 102022109057
(43) Veröffentlichungstag der Anmeldung: 18.10.2023
(73) Patentinhaber: Yazaki Systems Technologies GmbH, 93059 Regensburg (DE)
(72) Erfinder: Wagner, Eva Maria, 94481 Grafenau (DE); Einert, Martin, 93077 Bad Abbach (DE)
(74) Vertreter: Patentanwaltskanzlei WILHELM & BECK

(56) Entgegenhaltungen:
- DE-A1- 3 838 706
- DE-U1- 9 316 599
- JP-A- H11 185 548

## Beschreibung

Die Erfindung betrifft eine Kabelhalterung nach Anspruch 1. Ferner betrifft die Erfindung ein Verfahren zum manuellen und/oder automatisierten Bestücken eines Verbindergehäuses eines Kraftfahrzeug-Kabelbaums nach Anspruch 8.

Aus DE 38 38 706 A1 ist ein Kabelbaum mit einer Vielzahl elektrischer Drähte, die einen Stammleitungsabschnitt und Zweigleitungsabschnitte bilden, verlegt auf einer Verdrahtungsplatte, um eine bestimmte Gestalt des Kabelbaumes zu bilden, bekannt.

Aus JP H11 185548 A ist ein Verfahren zur Herstellung eines Kabelbaums bekannt.

Aus DE 93 16 599 U1 ist eine Anordnung zum Ordnen und Binden eines langgestreckten Gegenstands, insbesondere eines Kabelbaums bekannt.

Bei der Herstellung von elektrischen Kabelbäumen für z. B. Kraftfahrzeuge erfordert ein Bestücken eines Verbindergehäuses eines dadurch entstehenden Kabelbaum-Steckverbinders an einem dadurch entstehenden Kabelbaum ein feinfühliges Vorgehen und zusammengesetzte Bewegungsabläufe der Hände eines Werkers, wobei eine gute Hand-Augen-Koordination des Werkers notwendig ist. Hierbei müssen elektrische Terminals mit Rasteinrichtungen, inkl. ihren daran elektrisch angeschlossenen Leitungen, korrekt orientiert und richtig platziert in das betreffende Verbindergehäuse eingesteckt werden.

Eine Komplexität der darüber hinaus diffizilen Montagebewegungen der elektrischen Terminals mit ihren daran vorgesehenen elektrischen Leitungen macht eine vollständige Automatisierung dieses Prozessschritts in der Produktion von Kabelbäumen für einen rationellen Serieneinsatz sehr schwierig. D. h. die Bewegungsabläufe sind z. B. durch Roboter schlecht bzw. nur teilweise automatisierbar. Erschwerend kommt hinzu, dass unterschiedliche elektrische Terminals mit unterschiedlichen elektrischen Leitungen und viele unterschiedliche Verbindergehäuse bei Kabelbäumen zur Anwendung kommen.

Eine Automatisierungslösung im Stand der Technik muss einer bestimmten Steckreihenfolge der elektrischen Terminals folgen, was bei größeren und komplexeren Kabelbäumen kaum darstellbar ist, ohne dass erhebliche Eingriffe in eine Bestückungsautomation vorzunehmen sind. Ein Bestückungsautomat hierfür müsste sehr groß dimensioniert sein, um mit allen Leitungslängen klarzukommen. Erhebliche Eingriffe wären notwendig, um sehr viele verschiedene Terminals stecken zu können. Eine serientaugliche Umsetzung ist mit extremen Kostenzuwächsen und langen Vorlaufzeiten verbunden. - Bestehende Automatisierungslösungen sind aufgrund oben genannter Problematik oft auf eine geringe Anzahl von elektrischen Terminals beschränkt. Zudem muss ein Bestückungsautomat diese wenigen elektrischen Terminals in einer bestimmten Reihenfolge stecken, z. B. von rechts/links unten nach links/rechts oben.

Dies hat den Hintergrund, dass aufgrund herabhängender elektrischer Leitungen in einer Bestückungsmatrix des betreffenden Verbindergehäuses, im Gravitationsfeld darunter gelegene Terminalkammern im Verbindergehäuse vom Bestückungsautomat nicht mehr bestückt werden können. Ein Bestückungsautomat kann ferner nur eine gewisse Länge der elektrischen Leitungen verarbeiten, da sonst die Gefahr eines Verhedderns von Leitungen besteht. Dieses Problem ist bis dato nur teilweise gelöst, was aber bereits mit höheren Taktzeiten verbunden ist. Zudem sind aktuelle Bestückungsautomaten bei einer Anzahl der möglichen Verbindergehäuse limitiert. Dies gilt sowohl für eine Menge als auch eine Ausführung der Verbindergehäuse.

Es ist eine Aufgabe der Erfindung, ein manuelles Bestücken eines Verbindergehäuses eines elektrischen Kraftfahrzeug-Kabelbaums mit elektrischen Terminals und den daran elektromechanisch angeschlossenen elektrischen Leitungen, also konfektionierten Leitungen, zu verbessern, oder ein teilautomatisiertes oder automatisiertes Bestücken eines Verbindergehäuses eines Kabelbaums zu ermöglichen. Dies soll kostengünstig, d. h. durch eine einfache Einrichtung, ein einfaches Verfahren zum Bestücken und/oder mit einem vertretbaren Zeitaufwand erfolgen können.

Die Aufgabe der Erfindung ist mittels einer Kabelhalterung zur manuellen und/oder automatisierten Bestückung eines Verbindergehäuses eines Kabelbaums; durch ein Verfahren zum manuellen und/oder automatisierten Bestücken eines Verbindergehäuses eines Kabelbaums; mittels eines Kabelbaumformbretts für eine manuelle und/oder automatisierte Herstellung eines Kabelbaums; und mittels eines elektrischen Kabelbaums, insbesondere eines Kraftfahrzeug-Kabelbaums, gemäß den unabhängigen Ansprüchen gelöst. - Vorteilhafte Weiterbildungen, zusätzliche Merkmale und/oder Vorteile der Erfindung ergeben sich aus den abhängigen Ansprüchen und der folgenden Beschreibung.

Ein Begriff, welcher im Folgenden den Bestandteil ,K/kabel' besitzt, bezieht sich immer auf eine materielle Entität, welche eine Mehrzahl von elektrischen Leitungen betrifft (vgl. den Begriff ,Kabelbaum'). Hierbei umfasst eine Leitung lediglich ein einziges Terminal mit wenigstens oder insbesondere genau einer einzigen daran elektromechanisch angeschlossenen, bevorzugt elektrisch isolierten Leitung. Ein eigentlicher elektrischer Leiter innerhalb einer elektrischen Isolierung der Leitung kann dabei als ein Litzenleiter und/oder ein Drahtleiter ausgebildet sein.

Die erfindungsgemäße Kabelhalterung zur Bestückung eines Verbindergehäuses eines Kabelbaums mit mit Terminals konfektionierten Leitungen ist derart ausgebildet, dass mittels der Kabelhalterung eine Mehrzahl von Leitungen für eine Bestückung des Verbindergehäuses derart vorsortiert an einem Kabelbaumformbrett halterbar sind und bevorzugt gehaltert werden, dass das Verbindergehäuse mit den Leitungen zielgerichtet bestückbar ist und bevorzugt bestückt wird. Ferner können dabei natürlich auch die Leitungen geroutet werden, während die Leitungen in der Kabelhalterung fest geklemmt sind.

Fehler bei der Bestückung des Verbindergehäuses mit den Terminals können durch die erfindungsgemäße Vorsortierung mittels der Kabelhalterung vermieden werden. Für die Bestückung des Verbindergehäuses mit den an den Leitungen befindlichen Terminals ist die Kabelhalterung an einem Bestückungsbrett vorgesehen, wobei das Bestückungsbrett und die Kabelhalterung das Kabelbaumformbrett konstituieren.

Das manuelle, teilautomatisierte oder automatisierte Bestücken des Verbindergehäuses, d. h. das (Ein-)Stecken der Terminals der Leitungen in die finalen Verbindergehäuse zum Kabelbaum-Steckverbinder und zum (teil-)konfektionierten Kabelbaum ist gemäß der Erfindung durch eine manuelle, teilautomatisierte oder automatisierte Vorstufe vereinfacht. Die erfindungsgemäße Kabelhalterung nimmt die Leitungen direkt am Kabelbaumformbrett auf und bereitet diese für das zeitlich nachfolgende Bestücken vor. Hierbei sind die Leitungen sortiert an/in der Kabelhalterung aufnehmbar und bevorzugt aufgenommen, sodass das Bestücken des Verbindergehäuses einfach und zielgerichtet erfolgen kann.

Hierbei ist eine Orientierung eines betreffenden Terminals beim Einlegen/Ansetzten und Haltern der betreffenden Leitung am/im Kabelhalter unerheblich. D. h. es muss keine zeitaufwändige Kameraprüfung und eine entsprechende Reorientierung der Terminals durchgeführt werden. Eine typische Push-Back-Bewegung, bei welcher ein Sitz des betreffenden Terminals im Verbindergehäuse kontrolliert wird, entfällt. Somit kann ein Verfahren zum Bestücken eines Verbindergehäuses deutlich schneller erledigt werden, da diese Schritte später manuell, teilautomatisiert oder automatisiert erfolgen können.

Erfindungsgemäß aufweist die Kabelhalterung einen in einem Haltergehäuse auf- und abbewegbaren Kabelhalter mit einer Mehrzahl von Leitungsaufnahmen, in welchen die Leitungen halterbar sind, wobei die Leitungsaufnahmen des Kabelhalters insbesondere unabhängig voneinander auf- und abbewegbar in der Kabelhalterung eingerichtet sind. Hierbei kann die Kabelhalterung, d. h. können deren Leitungsaufnahmen derart aufgebaut sein, dass sie eine gewisse Bandbreite an verschiedenen Leitungsquerschnitten handhaben kann. D. h. eine Fixierung, insbesondere eine Klemmung, der Leitung kann für eine Mehrzahl von Durchmessern der Leitungen wirksam sein.

In Abhängigkeit von einer Stellung des Kabelhalters bzw. von Stellungen der Leitungsaufnahmen an/in der Kabelhalterung können die Leitungen im Kabelhalter bzw. in den Leitungsaufnahmen aufnehmbar sein bzw. aufgenommen werden. Ferner können die Leitungen dabei im Kabelhalter bzw. in den Leitungsaufnahmen klemmbar sein bzw. geklemmt werden. Des Weiteren können die Leitungen dabei im Kabelhalter bzw. in den Leitungsaufnahmen locker führbar sein bzw. locker geführt werden. Darüber hinaus können die Leitungen dabei vom Kabelhalter bzw. von den Leitungsaufnahmen freigebbar sein bzw. freigegeben werden.

Jeweils eine Leitungsaufnahme des Kabelhalters kann mit einer betreffenden Klemmvorrichtung der Kabelhalterung, bevorzugt des Haltergehäuses, zusammenwirkbar in der Kabelhalterung eingerichtet sein, wobei in Abhängigkeit von einer Stellung der jeweiligen Leitungsaufnahme gegenüber der betreffenden Klemmvorrichtung, die jeweilige Leitung in der Leitungsaufnahme aufnehmbar, klemmbar, locker führbar und/oder wieder freigebbar ist.

Die jeweilige einzelne Leitungsaufnahme ist als eine im Wesentlichen stiftförmige Leitungsaufnahme ausgebildet. Ferner aufweist die Leitungsaufnahme einen Leitungsaufnahme-Aufnahmeabschnitt zum Klemmen. Hierbei ist natürlich die Leitung im Leitungsaufnahme-Aufnahmeabschnitt aufnehmbar und wieder freigebbar. Des Weiteren aufweist die Leitungsaufnahme einen Leitungsaufnahme-Führungsabschnitt zum gelagerten Führen der Leitungsaufnahme in der Kabelhalterung. Hierbei kann ein Leitungsaufnahme-Übergangsabschnitt zwischen dem Leitungsaufnahme-Aufnahmeabschnitt und dem Leitungsaufnahme-Führungsabschnitt eingerichtet sein.

Der Leitungsaufnahme-Aufnahmeabschnitt kann eine Leitungsklemme aufweisen. Die Leitungsklemme kann einen in seinen Abmessungen variierbaren Aufnahmeraum zum Klemmen und/oder lockeren Führen der Leitung aufweisen, wobei keine elektrische Verbindung besteht. Die Leitungsklemme kann dabei als ein Ringbogenabschnitt ausgebildet sein, in welchem die Leitung aufnehmbar ist. Unter einem Ringbogenabschnitt ist z. B. ein in Längsrichtung geschlitzter in einem Vergleich zu seinem Durchmesser bevorzugt kurzer Hohlzylinder verstanden, also ein Hohlzylinder mit einem bevorzugt teilkreisförmigen Bogenabschnitt als eine Grundfläche, bzw. eine an ihren beiden Stirnseiten offene und in Längsrichtung geschlitzte Hülse. Eine Breite des betreffenden Schlitzes liegt dabei in einem Bereich eines Außendurchmessers der Leitung bzw. ist geringfügig größer.

Die Leitungsklemme kann an einem freien Ende einen Spannschenkel zum Betätigen der Leitungsklemme aufweisen. Bevorzugt weist die Leitungsklemme an ihren beiden freien Enden solch einen Spannschenkel auf. Zwischen diesen beiden Spannschenkeln kann dann eine Einführöffnung des Leitungsaufnahme-Aufnahmeabschnitts hin zum Aufnahmeraum der Leitungsklemme eingerichtet sein. Hierbei können die beiden Spannschenkel schräg z. B. in einer V-Form-Anordnung vom Ringbogenabschnitt radial wegstehen. - Z. B. wenigstens ein konisch zulaufender Klemmvorrichtungs-Verspannabschnitt (vgl. unten) einer Klemmvorrichtung bzw. ein Druck (von oben) auf die Leitung bewirkt eine Bewegung der Leitungsaufnahme (nach unten) und betätigt den wenigstens einen Spannschenkel bzw. schließt die Leitungsklemme und verkleinert den Aufnahmeraum für die Leitung (Klemmen der Leitung).

Der Leitungsaufnahme-Führungsabschnitt kann z. B. als ein voll- oder hohlzylindrischer Abschnitt mit einer rechteckigen, insbesondere quadratischen, oder elliptischen Grundfläche ausgebildet sein. Eine andere, insbesondere eine Verdrehsicherung der Leitungsaufnahme realisierende Grundfläche für den Leitungsaufnahme-Führungsabschnitt ist natürlich anwendbar.

Die betreffende Klemmvorrichtung kann einen im Wesentlichen u- oder v-förmigen Klemmvorrichtungs-Aufnahmeabschnitt für den/einen Leitungsaufnahme-Aufnahmeabschnitt aufweisen. Ferner kann im Klemmvorrichtungs-Aufnahmeabschnitt ein Klemmvorrichtungs-Verspannabschnitt zum mechanischen Verspannen und ggf. Führen des Leitungsaufnahme-Aufnahmeabschnitts eingerichtet sein. Des Weiteren können die Klemmvorrichtungs- Verspannabschnitte eines einzelnen Klemmvorrichtungs-Aufnahmeabschnitts konisch aufeinander zulaufen (analog einer V-Form-Anordnung zweier einander betreffender Spannschenkel).

Eine Klemmeinrichtung der Kabelhalterung kann eine Mehrzahl von Klemmvorrichtungen aufweisen. Die Klemmeinrichtung kann dabei mittels einer Vielzahl von Klemmmodulen aufgebaut sein. D. h. die Klemmvorrichtungen der Klemmeinrichtung sind modular ausgebildet bzw. zusammengesetzt. Ferner kann die Klemmeinrichtung dabei aus lediglich einer, zwei oder drei Formen von Klemmmodulen ausgebildet sein. Des Weiteren kann dabei eine einzelne Klemmvorrichtung mittels zweier direkt benachbarter Klemmmodule ausgebildet sein.

Einander betreffende mechanische Koppelbereiche zweier Klemmmodule sind dabei insbesondere nach dem Schlüssel-Schloss-Prinzip bzw. zueinander wenigstens teilkomplementär aufgebaut. Insbesondere sind die mechanischen Koppelbereiche eines in der Klemmeinrichtung wiederholbaren Mittenmoduls derart ausgebildet, dass deren beide mechanischen Koppelbereiche ideell untereinander nach dem Schlüssel-Schloss-Prinzip bzw. zueinander wenigstens teilkomplementär aufgebaut sind. Dies kann anlog die beiden einander zugewandten Koppelbereiche eines ersten und eines zweiten Endmoduls betreffen.

Die Kabelhalterung kann einreihig als eine Kabelhalterungsschiene oder mehrreihig als ein Kabelhalterungsblock ausgebildet sein. Insbesondere ist die Kabelhalterung einreihig ausgebildet. Hierbei können eine Mehrzahl von einreihigen Kabelhalterungen in verschiedenen Konstellationen angeordnet werden; z. B.: auf einem Bestückungsbrett versetzt nach oben/unten und/oder rechts/links, als eine sternförmige Anordnung auf einem Bestückungsbrett etc. Dies erlaubt es auch, mehrreihige Verbindergehäuse mit einreihigen Kabelhalterungen zu behandeln. Ferner können einzelne Kabelhalterungsschienen nach Einlegen zu einem Block zusammengeschoben werden. Ausdrücklich sind auch mehrreihige bzw. mehrspaltige Kabelhalterungen als Kabelhalterungsblöcke anwendbar.

Mittels der Kabelhalterung können die Leitungen direkt und nicht deren Terminals halterbar sein bzw. gehaltert werden. Der Kabelhalter oder die jeweilige Leitungsaufnahme und/oder ein betreffendes Klemmmodul kann bzw. können integral ausgebildet sein. Unter einer integralen Ausbildung ist eine Ausbildung des Kabelhalters, der jeweiligen Leitungsaufnahme oder des betreffenden Klemmmoduls verstanden, bei welcher es nur ein einziges, nur unter dessen Zerstörung teilbares Bauteil gibt. Das Bauteil ist aus einem einzigen Ursprungsstück (Blech, Rohling etc.) und/oder einer einzigen Ursprungsmasse (Metall-/Kunststoffschmelze) gefertigt, das seinerseits bzw. die ihrerseits gezwungenermaßen integral ist. Ein innerer Zusammenhalt erfolgt mittels Adhäsion und/oder Kohäsion. Hierbei kann zusätzlich eine integrale Beschichtung, Abscheidung, Galvanisierung etc. vorliegen.

Die Kabelhalterung kann mittels wenigstens eines Befestigungsmittels auf/an dem Bestückungsbrett befestigbar sein. Hierbei kann ein Befestigungsmittel als ein gegenüber der Kabelhalterung, insbesondere dem Haltergehäuse, externes Befestigungsmittel ausgebildet sein. Solch ein Befestigungsmittel kann z. B. als eine Schraube, eine Klammer, ein Kleber etc. ausgebildet sein. Ferner kann ein Befestigungsmittel als ein internes Befestigungsmittel der Kabelhalterung, insbesondere des Haltergehäuses, ausgebildet sein. D. h. das Befestigungsmittel kann an/in der Kabelhalterung, insbesondere dem Haltergehäuse, ausgebildet sein. Solch ein Befestigungsmittel kann z. B. als eine Rasteinrichtung, eine Clipseinrichtung etc. ausgebildet sein. Des Weiteren kann ein Befestigungsmittel als ein Befestigungsmittel für eine Steck-, Schiebe- und/oder Aufsetzmontage der Kabelhalterung auf/an dem Bestückungsbrett ausgebildet sein.

Bei dem erfindungsgemäßen Verfahren zum Bestücken eines Verbindergehäuses eines Kabelbaums, mit mit Terminals konfektionierten Leitungen werden in einem ersten Schritt eine Mehrzahl von Leitungen an/in einer Kabelhalterung abschließend vorsortiert vorverlegt, und in einem auf den ersten Schritt zeitlich folgenden zweiten Schritt werden die Mehrzahl von Terminals der Leitungen in das Verbindergehäuse gesteckt. Hierbei verrasten die Terminals an/in dem Verbindergehäuse. In einem dritten Schritt zeitlich vor, beim oder insbesondere nach dem Stecken der Terminals in das Verbindergehäuse können die Leitungen von/aus der Kabelhalterung entnommen werden.

Im ersten Schritt können die Leitungen voneinander separiert an/in der Kabelhalterung vorverlegt werden. D. h. z. B., dass zum Bestücken einer beabsichtigten Anzahl von Terminalkammern, z. B. aller Terminalkammern, im Verbindergehäuse, die Kabelhalterung eine dazu wenigstens oder genau korrespondierende Anzahl von Aufnahmen für die Leitungen aufweist. Ferner können die Leitungen in die Kabelhalterung eingelegt und/oder in der Kabelhalterung geklemmt werden. Hierbei ist eine Reihenfolge, in welcher die Leitungen abgearbeitet werden, für das Klemmen in der Kabelhalterung unerheblich, da jede Leitung separat geklemmt werden kann.

Des Weiteren können bevorzugt die Leitungen selbst oder ggf. auch deren Terminals in der Kabelhalterung geklemmt werden. Insbesondre können die Leitungen an der Leitung selbst und nicht am Terminal geklemmt werden. So muss nicht auf eine richtige Orientierung der Terminals wie beim Stecken geachtet werden. Hierbei ist man unabhängig von einer Art und/oder Geometrie des Terminals selbst. Eine Klemmung an den Terminals ist aber natürlich ggf. möglich. - Im zweiten Schritt können die Leitungen in der Kabelhalterung gehalten und/oder geführt werden. Ferner können im zweiten Schritt die Terminals der Leitungen in das Verbindergehäuse gesteckt bzw. eingesteckt werden. - Im dritten Schritt können die Leitungen von der Kabelhalterung freigegeben werden.

Z. B. können die Leitungen, insbesondere deren Endabschnitte, beim Vorverlegen (Routing) der Leitungen an der Kabelhalterung, insbesondere in der Kabelhalterung, gehaltert, insbesondre fest geklemmt (fixiert) werden. Nach dem Vorverlegen können die Terminals in das Verbindergehäuse eingesteckt (Pinning) werden. Hierbei können die Leitungen mittels der Kabelhalterung, insbesondere in der Kabelhalterung, geführt, insbesondre locker bzw. lose geführt, werden. Ferner können nach dem Einstecken der Terminals in das Verbindergehäuse zum Kabelbaum-Steckverbinder, die Leitungen von der Kabelhalterung, insbesondere aus der Kabelhalterung, entnommen, insbesondre freigegeben (Releasing) werden. Hierbei entsteht ein (vor-)konfektionierter Kabelbaum.

Das Bestückverfahren für ein Verbindergehäuse mit einer Mehrzahl von Terminalkammer-Reihen kann derart abgearbeitet werden, dass die Leitungen für das Verbindergehäuse mittels wenigstens einer oder einer Mehrzahl von Kabelhalterungen, in den Terminalkammer-Reihen entsprechende Reihen und/oder Spalten gebündelt werden. D. h. z. B., dass eine Mehrzahl von Kabelhalterungen zur Anwendung kommen kann, wobei eine Anzahl der Kabelhalterungen mit einer Anzahl der Terminalkammer-Reihen des Verbindergehäuses korrespondieren kann. Z. B. n separate Kabelhalterungen für n Reihen des Verbindergehäuses.

Hierbei kann jeweils oder im Wesentlichen immer lediglich von einer Seite der wenigstens einen oder Mehrzahl von Kabelhalterungen ausgehend, ein Roboter oder ein Werker einen im Wesentlichen freien Zugang auf eine betreffende Leitung haben, wobei von dieser Seite aus die betreffende Leitung bevorzugt an der Leitung selbst oder ggf. an ihrem Terminal gegriffen und das Terminal in die für es vorgesehene Terminalkammer im Verbindergehäuse einsteckt wird. Hierbei kann das Terminal in dieser Terminalkammer bevorzugt selbstständig verrasten.

Das erfindungsgemäße Kabelbaumformbrett für eine Herstellung eines Kabelbaums weist eine Mehrzahl von mit Terminals konfektionierten Leitungen auf, wobei das Kabelbaumformbrett ein Bestückungsbrett und wenigstens eine erfindungsgemäße Kabelhalterung aufweist. Die Kabelhalterung kann lösbar oder unlösbar auf dem Bestückungsbrett festgelegt sein. Ferner kann die Kabelhalterung mittels einer Steck-, Schiebe- und/oder Aufsetzmontage auf dem Bestückungsbrett festgelegt sein. Darüber hinaus kann das Bestückungsbrett eine weitere Einrichtung zur Herstellung des Kabelbaums aufweisen. Solch eine Einrichtung kann als eine in das Bestückungsbrett integrierte Einrichtung oder als eine vom Bestückungsbrett separat hergestellte Einrichtung am Bestückungsbrett ausgebildet sein.

Der erfindungsgemäße Kabelbaum ist Beispielweise unter Zuhilfenahme eines erfindungsgemäßen Kabelbaumformbretts und/oder durch ein erfindungsgemäßes Bestückverfahren hergestellt. Der Kabelbaum kann z. B. an oder in eine Entität angesteckt bzw. eingesteckt sein. Die z. B. mechanische, (leistungs-)elektrische, fluidische und/oder optische Entität kann dabei als eine Vorrichtung; eine Einrichtung; ein Modul, z. B. eine HV-Verteilerbox für ein Elektrofahrzeug; ein Apparat; ein System; etc. ausgebildet sein.

Die Erfindung ist im Folgenden anhand von Ausführungsbeispielen unter Bezugnahme auf die beigefügte schematische und nicht maßstabsgetreue Zeichnung näher erläutert. Abschnitte, Elemente, Bauteile, Einheiten, Komponenten und/oder Schemata, welche eine identische, univoke oder analoge Ausbildung und/ oder Funktion besitzen, sind in der Figurenbeschreibung (s. u.), der Bezugszeichenliste, den Patentansprüchen und in den Figuren (Fig.) der Zeichnung mit denselben Bezugszeichen gekennzeichnet. Eine mögliche, in der Erfindungsbeschreibung (s. o.) nicht erläuterte, in der Zeichnung nicht dargestellte und/oder nicht abschließende Alternative, eine statische und/ oder kinematische Umkehrung, eine Kombination etc. zu den Ausführungsbeispielen der Erfindung bzw. einer Komponente, einem Schema, einer Einheit, einem Bauteil, einem Element oder einem Abschnitt davon, kann ferner der Bezugszeichenliste und/oder der Figurenbeschreibung entnommen werden.

Bei der Erfindung kann ein Merkmal (Abschnitt, Element, Bauteil, Einheit, Komponente, Funktion, Größe etc.) positiv, d. h. vorhanden, oder negativ, d. h. abwesend, ausgestaltet sein. In dieser Spezifikation (Beschreibung (Erfindungsbeschreibung (s. o.), Figurenbeschreibung (s. u.)), Bezugszeichenliste, Patentansprüche, Zeichnung) ist ein negatives Merkmal als Merkmal nicht explizit erläutert, wenn nicht gemäß der Erfindung Wert daraufgelegt ist, dass es abwesend ist. D. h. die tatsächlich gemachte und nicht eine durch den Stand der Technik konstruierte Erfindung darin besteht, dieses Merkmal wegzulassen.

Ein Merkmal dieser Spezifikation kann nicht nur in einer angegebenen Art und/oder Weise, sondern auch in einer anderen Art und/oder Weise angewendet sein (Isolierung, Zusammenfassung, Ersetzung, Hinzufügung, Alleinstellung, Weglassung etc.). Insbesondere ist es möglich, anhand eines Bezugszeichens und einem diesem zugeordneten Merkmal bzw. vice versa, in der Beschreibung, der Bezugszeichenliste, den Patentansprüchen und/oder der Zeichnung, ein Merkmal in den Patentansprüchen und/oder der Beschreibung zu ersetzen, hinzuzufügen oder wegzulassen. Darüber hinaus kann dadurch ein Merkmal in einem Patentanspruch ausgelegt und/oder näher spezifiziert werden.

Die Merkmale der Beschreibung sind (angesichts des (zunächst meist unbekannten) Stands der Technik) auch als optionale Merkmale interpretierbar; d. h. ein jedes Merkmal kann als ein fakultatives, arbiträres oder bevorzugtes, also als ein nicht verbindliches, Merkmal aufgefasst werden. So ist eine Herauslösung eines Merkmals, ggf. inkl. seiner Peripherie, aus einem Ausführungsbeispiel möglich, wobei dieses Merkmal dann auf einen verallgemeinerten Erfindungsgedanken übertragbar ist. Das Fehlen eines Merkmals (negatives Merkmal) in einem Ausführungsbeispiel zeigt, dass das Merkmal in Bezug auf die Erfindung optional ist. Ferner ist bei einem Artbegriff für ein Merkmal auch ein Gattungsbegriff für das Merkmal mitlesbar (ggf. weitere hierarchische Gliederung in Untergattung etc.), wodurch, z. B. unter Beachtung von Gleichwirkung und/oder Gleichwertigkeit, eine Verallgemeinerung des Merkmals möglich ist.

In den lediglich beispielhaften Figuren (Fig.) zeigen:

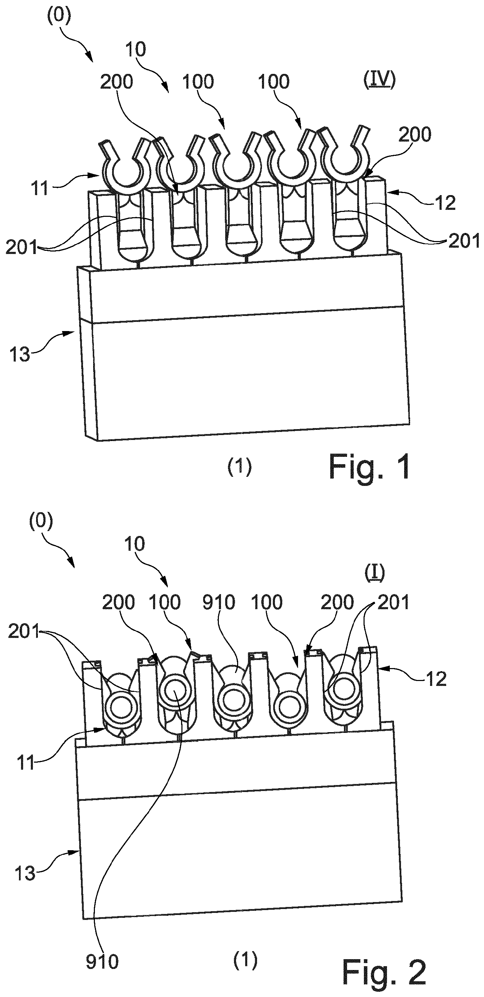

die Fig. 1 bis 3 in stirnseitigen Perspektivansichten eine Ausführungsform einer erfindungsgemäßen Kabelhalterung in jeweils unterschiedlichen Stellungen während einem Durchführen einer Ausführungsform eines erfindungsgemäßen Verfahrens zum Bestücken eines Verbindergehäuses eines Kabelbaums mit mit Terminals konfektionierten Leitungen,

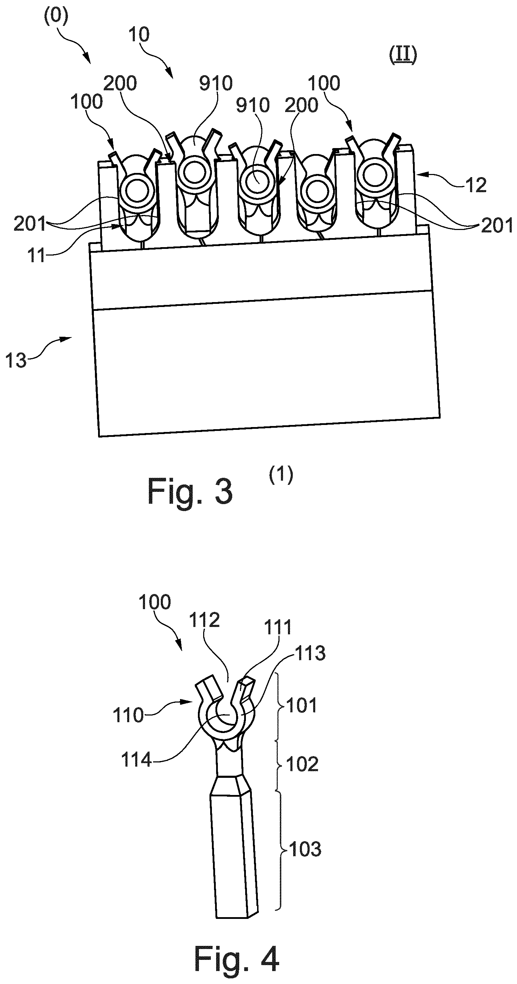

die Fig. 4 in einer dreidimensionalen Stirnansicht eine Ausführungsform eines in einem Haltergehäuse der erfindungsgemäßen Kabelhalterung aus den Fig. 1 bis 3 auf- und abbewegbaren Leitungsaufnahme mit einem Leitungsaufnahme-Aufnahmeabschnitt, einem Leitungsaufnahme-Übergangsabschnitt und einem Leitungsaufnahme-Führungsabschnitt, und

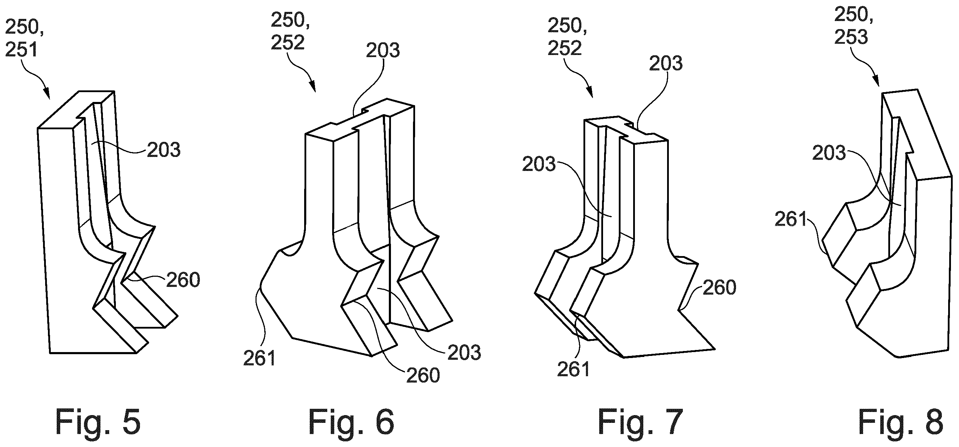

die Fig. 5 bis 8 in stirnseitigen Perspektivansichten ein erstes Endmodul (Fig. 5), eine im Wesentlichen erste Seite eines ersten Mittenmoduls (Fig. 6), eine im Wesentlichen zweite Seite eines zweiten Mittenmoduls (Fig. 7) und ein zweites Endmodul (Fig. 8) einer modular aufgebauten Klemmeinrichtung der Kabelhalterung.

Die Erfindung ist im Folgenden anhand von Ausführungsformen einer Variante einer Kabelhalterung 10 zur Bestückung und anhand von Ausführungsformen einer Variante eines erfindungsgemäßen Verfahrens zum Bestücken eines Verbindergehäuses eines Kabelbaums, mit mit elektrischen Terminals konfektionierten elektrischen Leitungen 910 näher erläutert. Obwohl die Erfindung detaillierter durch bevorzugte Ausführungsformen näher beschrieben und illustriert ist, so ist die Erfindung nicht durch die offenbarten Ausführungsformen eingeschränkt, sondern ist von grundlegenderer Natur. Andere Variationen können hieraus und/oder aus Obigem (Erfindungsbeschreibung) abgeleitet werden, ohne den Schutzumfang der Erfindung zu verlassen. Die Erfindung ist dabei allgemein im mechanischen, (leistungs-)elektrischen (auch elektrische Energietechnik und Analoga), fluidischen und/oder optischen Bereich anwendbar.

In der Zeichnung sind nur diejenigen Abschnitte eines Gegenstands der Erfindung dargestellt, welche für ein Verständnis der Erfindung notwendig sind. - Die Fig. 1 bis 3 zeigen die auf einem Bestückungsbrett 1 (nicht dargestellt) für Kabelbäume vorsehbare oder vorgesehene Kabelhalterung 10 für einen herzustellenden Kabelbaum. Vorliegend ist die Kabelhalterung 10 einreihig als eine Kabelhalterungsschiene 10 ausgebildet; es ist jedoch möglich die Kabelhalterung 10 mehrreihig als einen Kabelhalterungsblock 10 auszubilden (nicht dargestellt). Hierbei bilden das Bestückungsbrett 1 und die Kabelhalterung 10 ein Kabelbaumformbrett 0 (natürlich ebenfalls nicht dargestellt).

Die Kabelhalterung 10 umfasst ein Haltergehäuse 13 und eine daran oder darin vorgesehene Klemmeinrichtung 12. Die Klemmeinrichtung 12 ist analog zur Kabelhalterung 10 einreihig als eine Klemmeinrichtungsschiene 12 oder mehrreihig als ein Klemmeinrichtungsblock 12 (natürlich ebenfalls nicht dargestellt) ausgebildet. Hierbei kann die Klemmeinrichtung 12 einstückig mit dem Haltergehäuse 13 vorgesehen sein (nicht dargestellt), oder die Klemmeinrichtung 12 ist separat vom Haltergehäuse 13 am/im Haltergehäuse 13 eingerichtet. Im zweiten Fall kann die Klemmeinrichtung 12 mehrteilig, z. B. modular (vgl. die Fig. 5 bis 8), stofflich einstückig oder integral ausgebildet sein.

Die Klemmeinrichtung 12 umfasst eine Mehrzahl von Klemmvorrichtungen 200. Die Klemmvorrichtungen 200 dienen durch ein mechanisches Zusammenwirken mit Leitungsaufnahmen 100 eines Kabelhalters 11 (vgl. unten) der Kabelhalterung 10, einem vorsortierten Haltern der Leitungen 910 am Kabelbaumformbrett 0 zur Bestückung des Verbindergehäuses und somit zur Herstellung des Kabelbaums. Hierdurch ist das Verbindergehäuse mit den Leitungen 910 durch einen Werker und/oder einen Roboter einfacher als im Stand der Technik und zielgerichtet bestückbar. Beim Durchführen eines Verfahrens zum Bestücken des Verbindergehäuses und somit zum Herstellen des Kabelbaums wird das Verbindergehäuse unter Zuhilfenahme der Kabelhalterung 10 bestückt.

Eine einzelne Klemmvorrichtung 200 weist einen Klemmvorrichtungs-Aufnahmeabschnitt 201 für denjenigen Abschnitt einer jeweiligen Leitungsaufnahme 100 auf, in welchem die Leitung während des Verfahrens zum Bestücken aufnehmbar, klemmbar, locker führbar und/oder wieder freigebbar ist. Im Klemmvorrichtungs-Aufnahmeabschnitt 201 ist dafür wenigstens ein Klemmvorrichtungs-Verspannabschnitt 203 (vgl. die Fig. 5 bis 8) eingerichtet. Insbesondere sind in einem einzelnen Klemmvorrichtungs-Aufnahmeabschnitt 201 zwei einander gegenüberliegende Klemmvorrichtungs-Verspannabschnitte 203 eingerichtet.

Der Klemmvorrichtungs-Verspannabschnitt 203 bzw. die Klemmvorrichtungs-Verspannabschnitte 203 dienen in Abhängigkeit von einer Stellung des Kabelhalters 11 bzw. jeweiligen Leitungsaufnahme 100 an/in der Kabelhalterung 10 einem Aufnehmen, einem Klemmen, einem lockeren Führen und/oder einem wieder Freigeben der jeweiligen Leitung 910. Hierbei nimmt der Kabelhalter 11 bzw. die jeweilige Leitungsaufnahme 100 für das Aufnehmen / wieder Freigeben (Fig. 1), das Klemmen (Fig. 2) und das lockere Führen (Fig. 3, (Ein-)Stecken der Terminals an/in das Verbindergehäuse) eine bevorzugt jeweils unterschiedliche Stellung an/in der Kabelhalterung 10 ein.

Klemmmodule 250; 251, 252, 253 für eine modulare Klemmeinrichtung 12 sind z. B. in den Fig. 5 bis 8 dargestellt, wofür für eine beliebige Anzahl von Klemmvorrichtungen 200 drei unterschiedliche Klemmmodule 250; 251, 252, 253 angewendet werden. Es ist natürlich möglich, einen modularen Aufbau mit nur einem einzigen, zwei oder mehr als drei Klemmmodulen 250 zu realisieren. - Vorliegend ist eine einzelne Klemmvorrichtung 200 mittels zweier direkt benachbarter Klemmmodule 250/250; 251/252, 252/252, ... 252/253 ausgebildet. Hierbei finden ein einziges erstes Endmodul 251, ein einziges zweites Endmodul 253 und je nach einer benötigten Anzahl von Klemmvorrichtungen 200 eine bestimmte Anzahl von Mittenmodule 252 Anwendung. Vorliegend werden für n Klemmvorrichtungen 200 neben den beiden Endmodulen 251, 253 n-1 Mittenmodule 252 benötigt.

Zueinander benachbarte Klemmmodule 250; 251, 252, 253 sind bevorzugt mittels wenigstens teilkomplementärer mechanischer Koppelbereiche 260, 261 miteinander mechanisch verbunden, insbesondere derart verbunden, dass zwischen den Klemmmodulen 250; 251, 252, 253 mechanische Druckkräfte übertragbar sind. Statt teilkomplementärer Koppelbereiche 260, 261 können auch Koppelbereiche 260, 261 nach dem Schlüssel-Schloss-Prinzip aneinander anliegen und/oder festgelegt sein. Ein gesamter Verbund aus den Klemmmodulen 250; 251, 252, 253 kann z. B. von unten kommend (mit Beug auf die Fig. 1 bis 3) in ein Haltergehäuse 13 eingesteckt und dort gehaltert oder festgelegt sein, sodass der Verbund aus den Klemmmodulen 250; 251, 252, 253 formstabil in der Kabelhalterung 10 eingerichtet ist.

Im Haltergehäuse 13 und der Klemmeinrichtung 12 ist der Kabelhalter 11 für die Leitungen 910 auf- und abbewegbar eingerichtet. Der Kabelhalter 11 umfasst eine Mehrzahl von Leitungsaufnahmen 100 welche kollektiv (nicht dargestellt) oder unabhängig voneinander auf- und abbewegbar in der Kabelhalterung 10 eingerichtet sind. Im zweiten Fall umfasst eine insbesondere für eine einzige Leitung 910 ausgelegte auf- und abbewegbare, bevorzugt stiftförmige Leitungsaufnahme 100 einen Leitungsaufnahme-Aufnahmeabschnitt 101, einen optionalen Leitungsaufnahme-Übergangsabschnitt 102 und einen Leitungsaufnahme-Führungsabschnitt 103 (s. Fig. 4).

Der Leitungsaufnahme-Führungsabschnitt 103 dient einem auf- und abbewegbaren Führen der jeweiligen Leitungsaufnahme 100 am/im Haltergehäuse 13, wofür das Haltergehäuse 13 entsprechende Führungen (nicht gezeigt), insbesondere Linearführungen, aufweist. - Der Leitungsaufnahme-Aufnahmeabschnitt 101 dient zeitlich nach einem darin Aufnehmen einer Leitung 910, einem Klemmen (Schritt I des Bestückverfahrens) und in einem zeitlichen Anschluss daran ggf. einem lockeren Führen (Schritt II des Bestückverfahrens) der Leitung 910, welche danach wieder aus dem Leitungsaufnahme-Aufnahmeabschnitt 101 herausnehmbar ist (wieder Freigeben der Leitung 910, Schritt III des Bestückverfahrens).

Vorliegend weist der Leitungsaufnahme-Aufnahmeabschnitt 101 eine eigentliche Aufnahme 110 für die Leitung 910 auf. Hierbei kann die Aufnahme 110 z. B. klammerförmig, teilringförmig, v-förmig etc. ausgebildet sein. Die Aufnahme 110 umfasst vorliegend eine Leitungsklemme 113 mit einem darin befindlichen eigentlichen Aufnahmeraum 114 zum Klemmen und/oder lockeren Führen der Leitung 910. Vorliegend ist die Leitungsklemme 113 als ein Ringbogenabschnitt 113 ausgebildet. Ferner umfasst die Aufnahme 110 wenigstens einen Spannschenkel 111 für die Leitungsklemme 113, an welchem oder zwischen welchen sich eine nach innen zulaufende Einführöffnung 112 für die Leitung 910 hin zum Aufnahmeraum 114 befindet.

Der betreffende einzige Spannschenkel 111 oder ein jeweiliger Spannschenkel 111 steht dabei im Wesentlichen radial von einem freien Ende der z. B. als Ringbogenabschnitt 113 ausgebildeten Leitungsklemme 113 ab. Insbesondere ist es möglich, nur einen einzigen Spannschenkel 111 zu haben und im Vergleich zur Fig. 4 den anderen Spannschenkel 111 wegzulassen, sodass dieser einzige Spannschenkel 111 dann in den Aufnahmeraum 114 für die Leitung 910 führt und damit dann die Leitungsklemme 113 zusammendrückbar ist. - Statt das Zusammendrücken der Leitungsklemme 113 über den oder die Spannschenkel 111 erfolgen zu lassen, ist es alternativ oder zusätzlich möglich, das Zusammendrücken der Leitungsklemme 113 durch die Leitungsklemme 113 selbst erfolgen zu lassen.

Mittels des wenigstens einen Spannschenkels 111 und/oder der Leitungsklemme 113 selbst ist der Aufnahmeraum 114 in der Leitungsklemme 113 in Abhängigkeit einer Drucckraft auf den wenigstens einen Spannschenkel 111 und/oder die Leitungsklemme 113 selbst verkleinerbar. Diese Druckkraft resultiert aus den weiter unten näher erläuterten Klemmvorrichtungs-Verspannabschnitten 203 der betreffenden Klemmvorrichtung 200. Insbesondere ist die Leitung 910 an sich nach unten (vgl. die Fig. 1 nach 2) drückbar. Dadurch dass die betreffende Klemmvorrichtung 200 bevorzugt konisch zusammenläuft, schließt der einzige Spannschenkel 111 oder schließen die Spannschenkel 111, und/oder schließt die Leitungsklemme 113.

Eine andere Ausbildung des Leitungsaufnahme-Aufnahmeabschnitts 101, insbesondere eine abgewandelte Gestaltung der Spannschenkel 111 oder deren Substituierung, z. B. durch eine Einführschräge an der Leitungsklemme 113, ist natürlich anwendbar. Die Aufgabe eines Spannschenkels 111 kann dabei z. B. von einem Umfangsende der Leitungsklemme 113 übernommen sein.

Innerhalb eines Klemmvorrichtungs-Aufnahmeabschnitts 201 dient der wenigstens eine Klemmvorrichtungs-Verspannabschnitt 203 einen stellungsabhängigen mechanischen Verspannen des jeweiligen Leitungsaufnahme-Aufnahmeabschnitts 101 der Leitungsaufnahme 100. Ferner kann hierbei der Leitungsaufnahme-Aufnahmeabschnitt 101 vom Klemmvorrichtungs-Verspannabschnitt 203 mechanisch geführt sein. Für das Führen des Leitungsaufnahme-Aufnahmeabschnitts 101 kann der betreffende Klemmvorrichtungs-Verspannabschnitt 203 z. B. als eine Nut ausgebildet sein (vgl. die Fig. 5 bis 8).

Für das stellungsabhängige mechanische Verspannen des Leitungsaufnahme-Aufnahmeabschnitts 101 kann der Klemmvorrichtungs-Verspannabschnitt 203 gegenüber der gegenüberliegenden Seite desselben Klemmvorrichtungs-Aufnahmeabschnitts 201 schräg angeordnet sein. Insbesondere können dafür zwei in einem einzelnen Klemmvorrichtungs-Aufnahmeabschnitt 201 einander gegenüberliegende Klemmvorrichtungs-Verspannabschnitte 203 konisch aufeinander zulaufen.

Je nach einer Stellung des jeweiligen Leitungsaufnahme-Aufnahmeabschnitts 101 bzw. der jeweiligen Leitungsklemme 113 bzw. des wenigstens einen Spannschenkels 111 am/im Haltergehäuse 13, kann die Leitung 910 im jeweiligen Leitungsaufnahme-Aufnahmeabschnitt 101 bzw. der jeweiligen Leitungsklemme 113 aufgenommen (Aufnehmen und Haltern der Leitung 910, zeitlich in einem Anschluss an einen vorherige Endstellung IV, vgl. Fig. 1), geklemmt (Klemmen und Haltern der Leitung 910, Schritt I, Fig. 2), (lose) geführt ((lose) Führen und Haltern der Leitung 910, Schritt II, Fig. 3) und wieder freigegeben (Endstellung IV, Fig. 1) werden.

Ist der jeweilige Leitungsaufnahme-Aufnahmeabschnitt 101 bzw. der wenigstens eine Spannschenkel 111 an/in der Kabelhalterung 10 im Wesentlichen vollständig ausgefahren, so erfolgt bevorzugt keine mechanische Klemmung der Leitung 910 im Leitungsaufnahme-Aufnahmeabschnitt 101 bzw. der Leitungsklemme 113 (Fig. 1). In so einer Stellung der Leitungsaufnahme 100 kann die Leitung 910 einfach in den Leitungsaufnahme-Aufnahmeabschnitt 101 eingelegt bzw. freigegeben werden (Endstellung IV, Fig. 1). Die ggf. anwesenden Spannschenkel 111 erleichtern ein Vorbewegen der Leitung 910 in den Leitungsaufnahme-Aufnahmeabschnitt 101.

Ist der jeweilige Leitungsaufnahme-Aufnahmeabschnitt 101 bzw. der wenigstens eine Spannschenkel 111 an/in der Kabelhalterung 10 im Wesentlichen vollständig eingefahren, so erfolgt eine deutliche mechanische Klemmung der Leitung 910 im Leitungsaufnahme-Aufnahmeabschnitt 101 bzw. der Leitungsklemme 113 (Fig. 2). In so einer Stellung der Leitungsaufnahme 100 kann sich die Leitung 910 im Leitungsaufnahme-Aufnahmeabschnitt 101 nicht mehr wesentlich bewegen (Schritt I, Fig. 2), d. h. dass sich die Leitung 910 nicht mehr entlang ihrer Längserstreckung bewegen lässt. Bewegungen aus der Leitung 910 übertragen sich auf die Kabelhalterung 10 und ggf. vice versa. Wenn die Leitungen 910 geklemmt sind, kann der Kabelbaum geroutet werden, also die einzelnen Leitungen 910 verlegt werden. Der Kabelbaum beginnt eigentlich hier schon zu entstehen und nicht erst beim Stecken der Terminals ins Verbindergehäuse.

Befindet sich der jeweilige Leitungsaufnahme-Aufnahmeabschnitt 101 bzw. der wenigstens eine Spannschenkel 111 an/in der Kabelhalterung 10 in einer Mittelstellung zwischen der im Wesentlichen vollständig ausgefahren und der im Wesentlichen vollständig eingefahrenen Stellung, so erfolgt keine deutliche mechanische Klemmung der Leitung 910 im Leitungsaufnahme-Aufnahmeabschnitt 101 bzw. der Leitungsklemme 113 (Schritt II, Fig. 3) mehr. Die Leitung 910 ist in dieser Stellung im Leitungsaufnahme-Aufnahmeabschnitt 101 locker führbar, d. h. die Leitung 910 kann durch den Leitungsaufnahme-Aufnahmeabschnitt 101 hindurch gefädelt werden, ohne dass die Leitung 910 den Leitungsaufnahme-Aufnahmeabschnitt 101 einfach durch die Einführöffnung 112 verlassen kann.

In dieser Stellung (Schritt II, Fig. 3) des Leitungsaufnahme-Aufnahmeabschnitts 101 können die Terminals in das Verbindergehäuse gesteckt bzw. eingesteckt werden. Dies gilt analog für die Leitungsaufnahmen 100 bzw. kollektiv für den Kabelhalter 11. Je mehr Terminals derart in das Verbindergehäuse gesteckt bzw. eingesteckt werden desto mehr konstituiert sich der Kabelbaum. Hierbei entsteht ferner der mit den Terminals bestückte Steckverbinder sukzessive immer mehr. Sind alle Terminals gesteckt bzw. eingesteckt so sind der Steckverbinder und der Kabelbaum hergestellt.

### Bezugszeichenliste

- 0: Kabelbaumformbrett
- 1: Bestückungsbrett

- 10: (einreihige oder mehrreihige) Kabelhalterung
- 11: Kabelhalter für Leitungen 910
- 12: (einstückige oder modulare) Klemmeinrichtung
- 13: Haltergehäuse

- 100: (auf- und abbewegbare) Leitungsaufnahme für insbesondere eine einzige Leitung 910
- 101: Leitungsaufnahme-Aufnahmeabschnitt
- 110: Aufnahme, z. B. klammerförmig, teilringförmig, v-förmig etc.
- 111: Spannschenkel für Leitungsklemme 113 (optional)
- 112: Einführöffnung zwischen Spannschenkeln 112 hin zum Aufnahmeraum 114 (optional)
- 113: Leitungsklemme, z. B. Ringbogenabschnitt
- 114: (eigentlicher) Aufnahmeraum zum Klemmen und/oder lockeren Führen bevorzugt einer einzigen Leitung 910
- 102: (optionaler) Leitungsaufnahme-Übergangsabschnitt
- 103: Leitungsaufnahme-Führungsabschnitt

- 200: Klemmvorrichtung für insbesondere eine einzige Leitungsaufnahme 100
- 201: Klemmvorrichtungs-Aufnahmeabschnitt
- 203: Klemmvorrichtungs-Verspannabschnitt
- 250: Klemmmodul einer modularen Klemmeinrichtung 12
- 251: (erstes) Endmodul
- 252: Mittenmodul mit bevorzugt komplementären Koppelbereichen 260, 261
- 253: (zweites) Endmodul
- 260: (mechanischer) Koppelbereich (Schloss/Schlüssel) bevorzugt wenigstens teilkomplementär zu Koppelbereich 261
- 261: (mechanischer) Koppelbereich (Schlüssel/Schloss) bevorzugt wenigstens teilkomplementär zu Koppelbereich 260
- 910: (elektrische) Leitung

- I: (erster) Schritt des Bestückverfahrens
- II: (zweiter) Schritt des Bestückverfahrens
- III: (dritter) Schritt des Bestückverfahrens
- IV: Ausgangs-/Endstellung des Kabelhalters 11 bzw. einer jeweiligen Leitungsaufnahme 110 an/in der Kabelhalterung 10

## Patentansprüche

1. Kabelhalterung (10) zur manuellen oder automatisierten Bestückung eines Verbindergehäuses eines elektrischen Kraftfahrzeug-Kabelbaums, mit mit elektrischen Terminals konfektionierten elektrischen Leitungen (910), wobei
mittels der Kabelhalterung (10) eine Mehrzahl von Leitungen (910) für eine Bestückung des Verbindergehäuses derart vorsortiert an einem Kabelbaumformbrett (0) halterbar sind und bevorzugt gehaltert werden, dass das Verbindergehäuse mit den Leitungen (910) zielgerichtet bestückbar ist und bevorzugt bestückt wird,
wobei die Kabelhalterung (10) einen in einem Haltergehäuse (13) auf- und abbewegbaren Kabelhalter (11) mit einer Mehrzahl von Leitungsaufnahmen (100) aufweist, in welchen die Leitungen (910) halterbar sind,
**dadurch gekennzeichnet, dass**
die Leitungsaufnahmen (100) des Kabelhalters (11) unabhängig voneinander auf- und abbewegbar in der Kabelhalterung (10) zwischen einer ersten Stellung (IV) und einer zweiten Stellung eingerichtet sind,
wobei die jeweilige einzelne Leitungsaufnahme (100):
• als eine im Wesentlichen stiftförmige Leitungsaufnahme (100) ausgebildet ist,
• einen Leitungsaufnahme-Aufnahmeabschnitt (101) zum Klemmen aufweist, und
• einen Leitungsaufnahme-Führungsabschnitt (103) zum gelagerten Führen der Leitungsaufnahme (100) in der Kabelhalterung (10) aufweist,
wobei in der ersten Stellung der jeweilige Leitungsaufnahme-Aufnahmeabschnitt (101) an/in der Kabelhalterung (10) im Wesentlichen derart ausgefahren ist, dass keine mechanische Klemmung der Leitung (910) im Leitungsaufnahme-Aufnahmeabschnitt (101) erfolgt,
wobei in der zweiten Stellung der jeweilige Leitungsaufnahme-Aufnahmeabschnitt (101) an/in der Kabelhalterung (10) im Wesentlichen derart eingefahren wird, dass eine mechanische Klemmung der Leitung (910) im Leitungsaufnahme-Aufnahmeabschnitt (101) der Leitungsklemme (113) erfolgt.

2. Kabelhalterung (10) gemäß Anspruch 1, **dadurch gekennzeichnet, dass** in Abhängigkeit von einer Stellung des Kabelhalters (11) bzw. von Stellungen der Leitungsaufnahmen (100) an/in der Kabelhalterung (10):
• die Leitungen (910) im Kabelhalter (11) bzw. in den Leitungsaufnahmen (100) klemmbar sind und bevorzugt geklemmt werden (I), und /oder
• die Leitungen (910) im Kabelhalter (11) bzw. in den Leitungsaufnahmen (100) führbar sind und bevorzugt locker geführt werden, und/oder
• die Leitungen (910) vom Kabelhalter (11) bzw. von den Leitungsaufnahmen (100) freigebbar sind und bevorzugt freigegeben werden.

3. Kabelhalterung (10) gemäß einem der vorhergehenden Ansprüche, **dadurch gekennzeichnet, dass** jeweils eine Leitungsaufnahme (100) des Kabelhalters (11) mit einer betreffenden Klemmvorrichtung (200) der Kabelhalterung (10), bevorzugt des Haltergehäuses (13), zusammenwirkbar in der Kabelhalterung (10) eingerichtet ist, wobei
in Abhängigkeit von einer Stellung der jeweiligen Leitungsaufnahme (100) gegenüber der betreffenden Klemmvorrichtung (200), die jeweilige Leitung (910) in der Leitungsaufnahme (100) aufnehmbar, klemmbar, führbar und wieder freigebbar ist.

4. Kabelhalterung (10) gemäß einem der vorhergehenden Ansprüche, **dadurch gekennzeichnet, dass** der Leitungsaufnahme-Aufnahmeabschnitt (101) eine Leitungsklemme (113) aufweist, wobei:
• die Leitungsklemme (113) einen in seinen Abmessungen variierbaren Aufnahmeraum (114) zum Klemmen und/oder Führen der Leitung (910) aufweist,
• die Leitungsklemme (113) als ein Ringbogenabschnitt (113) ausgebildet ist, in welchem die Leitung (910) aufnehmbar ist, und/oder
• die Leitungsklemme (113) an einem freien Ende einen Spannschenkel (111) zum Betätigen der Leitungsklemme (113) aufweist.

5. Kabelhalterung (10) gemäß einem der vorhergehenden Ansprüche, **dadurch gekennzeichnet, dass** die betreffende Klemmvorrichtung (200):
• einen im Wesentlichen U- oder V-förmigen Klemmvorrichtungs-Aufnahmeabschnitt (201) für einen Leitungsaufnahme-Aufnahmeabschnitt (101) der Leitungsaufnahme (100) aufweist,
• im Klemmvorrichtungs-Aufnahmeabschnitt (201) ein Klemmvorrichtungs-Verspannabschnitt (203) zum mechanischen Verspannen des Leitungsaufnahme-Aufnahmeabschnitts (101) eingerichtet ist, und/oder
• die Klemmvorrichtungs-Verspannabschnitte (203) eines einzelnen Klemmvorrichtungs-Aufnahmeabschnitts (201) konisch aufeinander zulaufen.

6. Kabelhalterung (10) gemäß einem der vorhergehenden Ansprüche, **dadurch gekennzeichnet, dass** eine Klemmeinrichtung (12) der Kabelhalterung (10) eine Mehrzahl von Klemmvorrichtungen (200) aufweist, wobei:
• die Klemmeinrichtung (12) mittels einer Vielzahl von Klemmmodulen (250; 251, 252, ..., 253) aufgebaut ist,
• die Klemmeinrichtung (12) aus lediglich einer, zwei oder drei Formen von Klemmmodulen (250; 251, 252, ..., 253) ausgebildet ist, und/oder
• eine einzelne Klemmvorrichtung (200) mittels zweier direkt benachbarter Klemmmodule (252) ausgebildet ist.

7. Kabelhalterung (10) gemäß einem der vorhergehenden Ansprüche, **dadurch gekennzeichnet, dass**:
• die Kabelhalterung (10) einreihig als eine Kabelhalterungsschiene oder mehrreihig als ein Kabelhalterungsblock ausgebildet ist,
• mittels der Kabelhalterung (10) die Leitungen (910) direkt halterbar sind und bevorzugt gehaltert werden, und/oder
• der Kabelhalter (11), die jeweilige Leitungsaufnahme (100) oder ein betreffendes Klemmmodul (250; 251, 252, 253) integral ausgebildet ist.

8. Verfahren zum manuellen oder automatisierten Bestücken eines Verbindergehäuses eines elektrischen Kraftfahrzeug-Kabelbaums, mit mit elektrischen Terminals konfektionierten elektrischen Leitungen (910), **dadurch gekennzeichnet, dass**
eine Kabelhalterung (10) nach einem der vorhergehenden Ansprüche bereitgestellt wird,
wobei der jeweilige Leitungsaufnahme-Aufnahmeabschnitt (101) an/in der Kabelhalterung (10) in der ersten Stellung im Wesentlichen vollständig ausgefahren wird,
wobei in einem ersten Schritt (I) eine Mehrzahl von Leitungen (910) an/in einer Kabelhalterung (10) abschließend vorsortiert vorverlegt werden,
wobei der jeweilige Leitungsaufnahme-Aufnahmeabschnitt (101) an/in der Kabelhalterung (10) in eine Mittelstellung zwischen der im Wesentlichen vollständig ausgefahrenen ersten Stellung und der im Wesentlichen vollständig eingefahrenen zweiten Stellung gebracht wird,
wobei in einem auf den ersten Schritt (I) zeitlich folgenden zweiten Schritt (II), die Mehrzahl von Terminals der Leitungen (910) in das Verbindergehäuse gesteckt werden.

9. Verfahren gemäß vorhergehendem Anspruch, **dadurch gekennzeichnet, dass** in einem dritten Schritt (III) zeitlich vor, beim oder nach dem Stecken der Terminals in das Verbindergehäuse, die Leitungen (910) von/aus der Kabelhalterung (10) entnommen werden.

10. Verfahren gemäß Anspruch 8 oder 9, **dadurch gekennzeichnet, dass** im ersten Schritt (I):
• die Leitungen (910) voneinander separiert an/in der Kabelhalterung (10) vorverlegt werden,
• die Leitungen (910) in die Kabelhalterung (10) eingelegt und/oder in der Kabelhalterung (10) geklemmt werden, und/oder
• die Leitungen (910) selbst oder deren Terminals in der Kabelhalterung (10) geklemmt werden.

11. Verfahren gemäß einem der Ansprüche 8 bis 10, **dadurch gekennzeichnet, dass**:
• im zweiten Schritt (II) die Leitungen (910) in der Kabelhalterung (10) gehalten und/oder geführt werden,
• im zweiten Schritt (II) die Terminals der Leitungen (910) in das Verbindergehäuse eingesteckt werden, und/oder
• im dritten Schritt (III) die Leitungen (910) von der Kabelhalterung (10) freigegeben werden.

12. Kabelbaumformbrett (0) für eine manuelle und/oder automatisierte Herstellung eines elektrischen Kraftfahrzeug-Kabelbaums aufweisend eine Mehrzahl von mit elektrischen Terminals konfektionierten elektrischen Leitungen (910), **dadurch gekennzeichnet, dass**
das Kabelbaumformbrett (0) ein Bestückungsbrett (1) und wenigstens eine Kabelhalterung (10) aufweist, wobei die Kabelhalterung (10) gemäß einem der Ansprüche 1 bis 7 ausgebildet ist.

## Claims

1. Cable holder (10) for the manual or automated fitting of a connector housing of an electrical motor vehicle cable harness with electrical lines (910) which are assembled with electrical terminals, wherein
the cable holder (10) can be used and is preferably used to hold a plurality of lines (910), for fitting of the connector housing, in a pre-sorted manner on a cable harness mould board (0) in such a way that the connector housing can be fitted and is preferably fitted with the lines (910) in a targeted manner,
wherein the cable holder (10) has a cable clip (11) which is movable up and down in a clip housing (13) and has a plurality of line receptacles (100) in which the lines (910) can be held,
**characterized in that**
the line receptacles (100) of the cable clip (11) are designed so as to be movable up and down independently of one another in the cable holder (10) between a first position (IV) and a second position,
wherein the respective individual line receptacle (100):
• is designed as a substantially pin-shaped line receptacle (100),
• has a line-receptacle receiving portion (101) for clamping purposes, and
• has a line-receptacle guiding portion (103) for the mounted guiding of the line receptacle (100) in the cable holder (10),
wherein, in the first position, the respective line-receptacle receiving portion (101) on/in the cable holder (10) is substantially extended in such a way that the line (910) is not mechanically clamped in the line-receptacle receiving portion (101),
wherein, in the second position, the respective line-receptacle receiving portion (101) on/in the cable holder (10) is substantially retracted in such a way that the line (910) is mechanically clamped in the line-receptacle receiving portion (101) of the line clamp (113).

2. Cable holder (10) according to Claim 1, **characterized in that**, depending on a position of the cable clip (11) or on positions of the line receptacles (100) on/in the cable holder (10):
• the lines (910) can be clamped and are preferably clamped (I) in the cable clip (11) or in the line receptacles (100), and/or
• the lines (910) can be guided and are preferably guided loosely in the cable clip (11) or in the line receptacles (100), and/or
• the lines (910) are releasable and are preferably released from the cable clip (11) or from the line receptacles (100).

3. Cable holder (10) according to either of the preceding claims, **characterized in that** in each case one line receptacle (100) of the cable clip (11) is designed so as to be able to interact with a relevant clamping device (200) of the cable holder (10), preferably of the clip housing (13), in the cable holder (10), wherein depending on a position of the respective line receptacle (100) with respect to the relevant clamping device (200), the respective line (910) can be received, clamped, and guided in the line receptacle (100) and can be released again.

4. Cable holder (10) according to any one of the preceding claims, **characterized in that** the line-receptacle receiving portion (101) has a line clamp (113), wherein:
• the line clamp (113) has a receiving space (114), which is variable in terms of its dimensions, for clamping and/or guiding the line (910),
• the line clamp (113) is embodied as an annular arc portion (113), in which the line (910) can be received, and/or
• the line clamp (113) has a tensioning limb (111) at a free end for actuating the line clamp (113).

5. Cable holder (10) according to any one of the preceding claims, **characterized in that** the relevant clamping device (200):
• has a substantially U-shaped or V-shaped clamping-device receiving portion (201) for a line-receptacle receiving portion (101) of the line receptacle (100),
• in the clamping-device receiving portion (201), a clamping-device bracing portion (203) is designed for mechanically bracing the line-receptacle receiving portion (101), and/or
• the clamping-device bracing portions (203) of an individual clamping-device receiving portion (201) converge conically towards each other.

6. Cable holder (10) according to any one of the preceding claims, **characterized in that** a clamping apparatus (12) of the cable holder (10) has a plurality of clamping devices (200), wherein:
• the clamping apparatus (12) is constructed from a multiplicity of clamping modules (250; 251, 252, ..., 253),
• the clamping apparatus (12) is formed from only one, two or three forms of clamping modules (250; 251, 252, ..., 253), and/or
• an individual clamping device (200) is formed by two directly adjacent clamping modules (252).

7. Cable holder (10) according to any one of the preceding claims, **characterized in that**:
• the cable holder (10) is formed in one row as a cable holder rail or in multiple rows as a cable holder block,
• the lines (910) can be held and are preferably held directly by the cable holder (10), and/or
• the cable clip (11), the respective line receptacle (100) or a relevant clamping module (250; 251, 252, 253) are formed integrally.

8. Method for the manual or automated fitting of a connector housing of an electrical motor vehicle cable harness with electrical lines (910) which are assembled with electrical terminals, **characterized in that**
a cable holder (10) according to any one of the preceding claims is provided,
wherein the respective line-receptacle receiving portion (101) on/in the cable holder (10) is substantially completely extended in the first position,
wherein, in a first step (I), a plurality of lines (910) are routed in a definitively pre-sorted manner on/in a cable holder (10),
wherein the respective line-receptacle receiving portion (101) on/in the cable holder (10) is brought into a central position between the substantially completely extended first position and the substantially completely retracted second position,
wherein, in a second step (II) temporally following the first step (I), the plurality of terminals of the lines (910) are plugged into the connector housing.

9. Method according to the preceding claim, **characterized in that**, in a third step (III), the lines (910) are removed from/out of the cable holder (10) temporally before, during or after the terminals are plugged into the connector housing.

10. Method according to Claim 8 or 9, **characterized in that**, in the first step (I):
• the lines (910) are routed, separated from one another, on/in the cable holder (10),
• the lines (910) are inserted into the cable holder (10) and/or clamped in the cable holder (10), and/or
• the lines (910) themselves or their terminals are clamped in the cable holder (10).

11. Method according to any one of Claims 8 to 10, **characterized in that**:
• in the second step (II), the lines (910) are held and/or guided in the cable holder (10),
• in the second step (II), the terminals of the lines (910) are plugged into the connector housing, and/or
• in the third step (III), the lines (910) are released from the cable holder (10).

12. Cable harness mould board (0) for manual and/or automated production of an electrical motor vehicle cable harness having a plurality of electrical lines (910) which are assembled with electrical terminals,
**characterized in that**
the cable harness mould board (0) has a fitting board (1) and at least one cable holder (10), the cable holder (10) being configured according to any one of Claims 1 to 7.

## Revendications

1. Support de câble (10) destiné à l'insertion manuelle ou automatisée de lignes électriques (910) confectionnées avec des bornes électriques dans un boîtier de connecteur d'un faisceau de câbles électrique de véhicule automobile, dans lequel
au moyen du support de câble (10), une pluralité de lignes (910) destinées à équiper le boîtier de connecteur peuvent être maintenues, et sont de préférence maintenues, de manière pré-triée sur une planque de forme de faisceau de câbles (0), de telle sorte que le boîtier de connecteur peut être équipé, et est de préférence équipé, de manière ciblée avec les lignes (910),
dans lequel le support de câble (10) présente un porte-câble (11) mobile vers le haut et vers le bas dans un boîtier de support (13) avec une pluralité de logements de ligne (100) dans lesquels les lignes (910) peuvent être maintenues,
**caractérisé en ce que**
les logements de ligne (100) du porte-câble (11) sont agencés de manière à pouvoir être déplacés vers le haut et vers le bas indépendamment les uns des autres dans le support de câble (10) entre une première position (IV) et une deuxième position,
dans lequel le logement de ligne individuel (100) respectif :
• est réalisé sous la forme d'un logement de ligne (100) sensiblement en forme de broche,
• présente une partie de réception de logement de ligne (101) pour le serrage, et
• présente une partie de guidage de logement de ligne (103) pour le guidage par palier du logement de ligne (100) dans le support de câble (10),
dans lequel, dans la première position, la partie de réception de logement de ligne (101) respective sur/dans le support de câble (10) est sensiblement déployée de telle sorte qu'aucun serrage mécanique de la ligne (910) n'a lieu dans la partie de réception de logement de ligne (101),
dans lequel, dans la deuxième position, la section de réception de logement de ligne (101) respective sur/dans le support de câble (10) est sensiblement rétractée de telle sorte qu'un serrage mécanique de la ligne (910) a lieu dans la section de réception de logement de ligne (101) du serre-câble (113).

2. Support de câble (10) selon la revendication 1, **caractérisé en ce que**, en fonction d'une position du porte-câble (11) ou de positions des logements de ligne (100) sur/dans le support de câble (10) :
• les lignes (910) peuvent être serrées et sont de préférence serrées (I) dans le porte-câble (11) ou dans les logements de ligne (100), et/ou
• les lignes (910) peuvent être guidées et sont de préférence guidées de manière lâche dans le porte-câble (11) ou dans les logements de ligne (100), et/ou
• les lignes (910) peuvent être libérées et sont de préférence libérées du porte-câble (11) ou des logements de ligne (100).

3. Support de câble (10) selon l'une des revendications précédentes, **caractérisé en ce qu'**un logement de ligne (100) du porte-câble (11) est respectivement conçu pour coopérer, dans le support de câble (10), avec un dispositif de serrage (200) concerné du support de câble (10), de préférence du boîtier de support (13), dans lequel,
en fonction d'une position du logement de ligne (100) respectif par rapport au dispositif de serrage (200) concerné, la ligne (910) respective peut être reçue, serrée, guidée et libérée dans le logement de ligne (100).

4. Support de câble (10) selon l'une des revendications précédentes, **caractérisé en ce que** la partie de réception de logement de ligne (101) comporte un serre-câble (113), dans lequel :
• le serre-câble (113) présente un espace de réception (114) de dimensions variables pour le serrage et/ou le guidage de la ligne (910),
• le serre-câble (113) est réalisé sous la forme d'une section d'arc annulaire (113) dans laquelle la ligne (910) peut être reçue et/ou
• le serre-câble (113) présente, à une extrémité libre, une branche de serrage (111) pour l'actionnement du serre-câble (113).

5. Support de câble (10) selon l'une des revendications précédentes, **caractérisé en ce que** le dispositif de serrage (200) concerné :
• présente une partie de réception de dispositif de serrage (201) sensiblement en forme de U ou de V pour une partie de réception de ligne (101) du logement de ligne (100),
• une partie de mise sous contrainte de dispositif de serrage (203) est ménagée dans la partie de réception de dispositif de serrage (201) pour la mise sous contrainte mécanique de la partie de réception de ligne (101), et/ou
• les parties de mise sous contrainte de dispositif de serrage (203) d'une partie de réception de dispositif de serrage (201) individuelle convergent de manière conique l'une vers l'autre.

6. Support de câble (10) selon l'une des revendications précédentes, **caractérisé en ce qu'**un système de serrage (12) du support de câble (10) présente une pluralité de dispositifs de serrage (200), dans lequel :
• le dispositif de serrage (12) est réalisé au moyen d'une pluralité de modules de serrage (250 ; 251, 252, ..., 253),
• le système de serrage (12) est formé de seulement une, deux ou trois formes de modules de serrage (250 ; 251, 252, ..., 253), et/ou
• un dispositif de serrage (200) individuel est formé au moyen de deux modules de serrage (252) directement adjacents.

7. Support de câble (10) selon l'une des revendications précédentes, **caractérisé en ce que** :
• le support de câble (10) est réalisé sur une seule rangée sous la forme d'un rail de support de câble ou sur plusieurs rangées sous la forme d'un bloc de support de câble,
• les lignes (910) peuvent être maintenues directement et sont de préférence maintenues au moyen du support de câble (10), et/ou
• le porte-câble (11), le logement de ligne (100) respectif ou un module de serrage (250 ; 251, 252, 253) concerné est réalisé de manière intégrale.

8. Procédé pour pour l'insertion manuelle ou automatisée de lignes électriques (910) confectionnées avec des bornes électriques dans un boîtier de connecteur d'un faisceau de câbles électrique de véhicule automobile, **caractérisé en ce qu'**il est prévu
un support de câble (10) selon l'une des revendications précédentes,
dans lequel la partie de réception de logement de ligne (101) respective sur/dans le support de câble (10) est déployée sensiblement complètement dans la première position,
dans lequel, lors d'une première étape (I), une pluralité de lignes (910) sont posées de manière pré-triée et finale sur/dans un support de câble (10),
dans lequel la partie de réception de logement de ligne (101) respective sur/dans le support de câble (10) est amenée dans une position intermédiaire entre la première position sensiblement complètement déployée et la deuxième position sensiblement complètement rétractée,
dans lequel, lors d'une deuxième étape (II) qui suit chronologiquement la première étape (I), la pluralité de bornes des lignes (910) sont enfichées dans le boîtier de connecteur.

9. Procédé selon la revendication précédente, **caractérisé en ce que**, lors d'une troisième étape (III), chronologiquement avant, pendant ou après l'enfichage des bornes dans le boîtier de connecteur, les lignes (910) sont retirées du support de câble (10).

10. Procédé selon la revendication 8 ou 9, **caractérisé en ce que**, lors de la première étape (I) :
• les lignes (910) sont posées de manière séparée les unes des autres sur/dans le support de câble (10),
• les lignes (910) sont insérées dans le support de câble (10) et/ou sont serrées dans le support de câble (10), et/ou
• les lignes (910) elles-mêmes ou leurs bornes sont serrées dans le support de câble (10).

11. Procédé selon l'une des revendications 8 à 10, **caractérisé en ce que** :
• lors de la deuxième étape (II), les lignes (910) sont maintenues et/ou guidées dans le support de câble (10),
• lors de la deuxième étape (II), les bornes des lignes (910) sont enfichées dans le boîtier de connecteur, et/ou
• lors de la troisième étape (III), les lignes (910) sont libérées du support de câble (10).

12. Plaque de forme de faisceau de câbles (0) pour la fabrication manuelle et/ou automatisée d'un faisceau de câbles électrique de véhicule automobile présentant une pluralité de lignes électriques (910) confectionnées avec des bornes électriques, **caractérisée en ce que**
la plaque de forme de faisceau de câbles (0) présente une plaque d'insertion (1) et au moins un support de câble (10), le support de câble (10) étant réalisé selon l'une des revendications 1 à 7.
